# EUROPEAN PATENT APPLICATION

(11) **EP 1 512 993 A1**
(43) Date of publication of application: **09.03.2005**
(21) Application number: 03405644.0
(22) Date of filing: 04.09.2003
(51) Int. Cl.: G02B 6/12, G02B 3/00, B29D 11/00

(54) **Method for replication of thin-film structures**

(71) Applicant: CSEM Centre Suisse d'Electronique et de Microtechnique SA, 2007 Neuchâtel (CH)
(72) Inventor: Gimkiewicz, Christiane, 8047 Zürich (CH); Zschokke, Christian, 5034 Suhr (CH); Gale, Michael T., 8907 Wettswil (CH)
(74) Representative: Patentanwälte Feldmann & Partner AG

(57) **Abstract**

The invention simplifies the replication of thin films (2) by a combination of a spin-coating and a replication process. According to the method for replication of a structure on a film (2), a liquid-material layer (2') is applied on a substrate (3). A surface of the liquid-material layer (2') is contacted with a surface of a mould (1) carrying the structure to be replicated. The liquid-material layer (2') is spread over the mould (1) by spinning (4). The liquid-material layer (2') is cured to form a solid film (2). The mould (1) is then removed from the film (2). The invention makes possible the production of a large variety of integrated-optical structures which can be combined with micromechanical structures. As liquid-materials, inorganic-organic polymers such as ORMOCER® are suitable. Film thicknesses are in the order of 1-100 µm. The film (2) fulfills high uniformity requirements, and the structure is well reproducible.

## Description

### Field of the invention

This invention relates to a wafer-scale replication process on glass substrates, silicon wafers or wafers with processed optoelectronic components. The method is suited to fabricate thin-film replicas, optical waveguides, stacked structured thin-film layers like stacked optical waveguides, waveguides with a three-dimensional slope and active optical waveguides, since electrical contacts can be incorporated.

### Background of the invention

Replication techniques for the replication of optical structures have steadily been improved during the last decades. Hot-embossing with a stamper, roller hot-embossing, casting, UV casting, and injection moulding are established techniques.

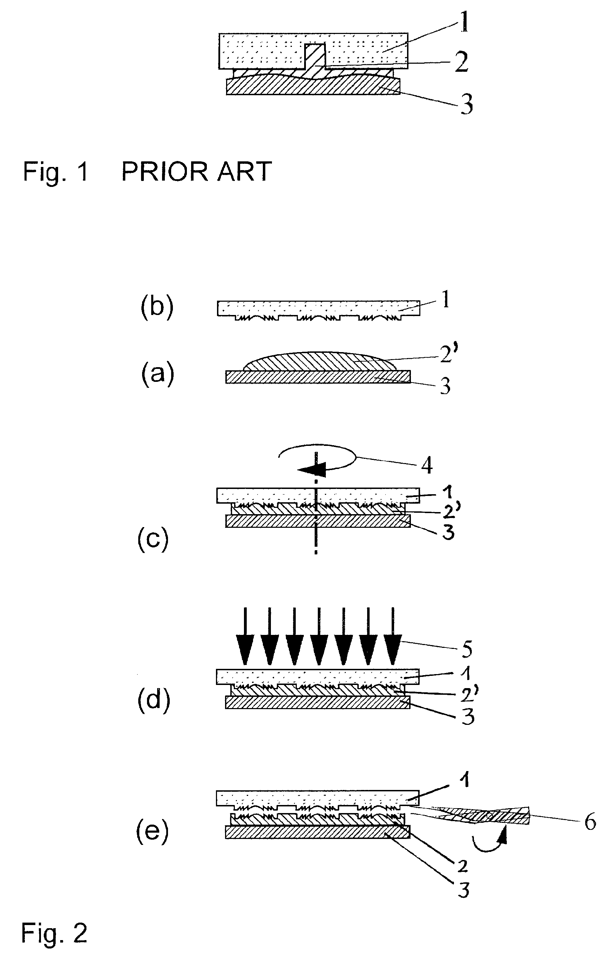

Replicas consisting of a thin layer on a substrate obey to the coefficient of thermal expansion of the substrate. Thus the structure fidelity and thereby the optical properties are ensured, a lower bending of the substrate occurs and lifetime relevant stability is increased. Especially ultraviolet (UV) casting is of interest to fabricate replicas consisting of a thin layer or film. This conventional technique is explained hereinafter with reference to prior-art Figure 1. An original master (not shown) carrying the optical structure to be replicated is copied to a mould or replication tool 1. In case of a wafer-scale process, the mould 1 is a flat wafer or substrate consisting of several master structures. Usually a replica carrier 3 is a blank substrate, an optoelectronic wafer, or a silicon wafer bearing electronic circuits or micromechanical structures. The alignment of the mould 1 with respect to the substrate 3 can be performed in a modified mask aligner. Replica material 2 is dispensed onto a surface of the substrate 3 and hardened with ultraviolet light between the mould 1 and the substrate 3. The wafer 3 with the replica film 2 is diced into the desired devices (P. Dannberg, L. Erdmann, R. Bierbaum, A. Krehl, A. Bräuer, and E. B. Kley, "Micro-optical elements and their integration to glass and optoelectronic wafers", Microsystem Technologies, Vol. 6, pp. 41-47, 1999).

In a UV-casting process, thin films with thicknesses in the order of 1 to 10 µm are difficult to produce for several reasons. First, the waviness of the mould 1 and the substrate 3 are often in the order of several micrometers and are transferred to the replica 2. Mould 1 and substrate 3 tend to touch when held in a close proximity. Alignment is no longer possible. A second reason is the replica material itself: materials with a high viscosity need a high-pressure and high-temperature environment to be thinned by a mould 1. Under such conditions, misalignments between mould 1 and substrate 3 increase. Third, the process time for thin films can be huge, since the time of flow can exceed several minutes or hours. Often, heating lowers the viscosity of the replica material, but the accuracy of sensible alignment stages and sensors suffer from the thermal influence. Thus for single-mode waveguides for example, hazardous errors can occur. However, waveguides consisting of Ormocer® material have been manufactured by this process (P. Dannberg, A. Bräuer, W. Karthe, R. Waldhäusl, "Replication of Waveguide Elements Using ORMOCER Material"; Micro System Technologies '94, Proc. of the 4th Int. Conf. Micro Electro, Opto, Mechanical Systems and Components; H. Reichl, A. Heuberger, (eds.); Berlin, Offenbach: VDE Verlag, pp. 281-287, 1994).

Thin films can be fabricated by spin coating. The spin-coating technique is mainly used in the semiconductor technology, e.g., for applying a photoresist to a wafer to be processed by photolithography. A simple embossing of a liquid film previously spun on a substrate would trap air inside the tiny structures of the mould, and it is not suitable to fabricate defect-free replicas. Thus the structuring of a spun film is performed by an additional lithographic step. The well-known lithography technique can be applied to produce waveguides in Ormocer® material (U. Streppel, P. Dannberg, C. Wächert, A. Bräuer, P. Nicole, L. Fröhlich, R. Houbertz, M. Popall, "Development of a new fabrication method for stacked optical waveguides using inorganic-organic copolymers", Proc. POLYTRONIC 2001, 1st Int. IEEE Conf. on Polymers and Adhesives in Microelectronics and Photonics, Potsdam, Germany, October 21-24, p. 329-335, 2001). By spin coating each material layer has a defined thickness. Then lithography defines the waveguide core. A development step washes out the unexposed areas with a solvent. Afterwards a cladding layer is spun onto the cores. The procedure can be repeated, thus the waveguides are stacked one over the other.

Another method for manufacturing thin-film waveguides is to fabricate a replica where the waveguides are confined in channels with vertical side-walls. By isotropic evaporation of a high index material the channels are filled to form the core (M. T. Gale, R. E. Kunz, H. P. Zappe, "Polymer and III-V transducer platform for integrated optical sensors", Opt. Eng. Vol. 34(8), pp. 2396-2406, 1995).

### Summary of the invention

It is an object of the invention to provide a method for replication of a structure on a film with a thickness in the order of 1 to 100 µm which does not suffer from the disadvantages described above. The film shall fulfill high uniformity requirements. The structure shall be well reproducible.

These and other objects are solved by the method as defined in the first claim. Advantageous embodiments are defined in the dependent claims.

The invention simplifies the replication of thin films by a combination of a spin-coating and a replication process. Spin coating and replication are two well-known techniques, as described above. However, their combination has hardly been considered to date, since they are used in different technical fields - replication in integrated optics, spin coating in semiconductor technology. Even if such a combination for manufacturing integrated-optical structures had been considered, it would have been rejected for various reasons. The two techniques do not seem to be compatible since materials for replication must not contain a solvent, whereas materials for spin-coating usually do contain a solvent. Spin-coating on structured surfaces has been avoided in order to prevent inhomogeneities in the film. It has been believed that the accuracy and reproducibility of the structures so obtained would not be sufficient.

The method according to the invention for replication of a structure on a film comprises the steps of:
contacting a surface of a liquid-material layer with a surface of a replication tool carrying the structure to be replicated;
hardening said liquid-material layer to form a solid film;
attaching said solid film to a substrate; and
removing said replication tool from said solid film.
Prior to or during the hardening step, said liquid-material layer is spread over said surface of said replication tool by centrifugal forces caused by spinning said replication tool and said liquid-material layer.

Two main embodiments of the method according to the invention can be distinguished:
A. a parallel process, where the replica is directly casted on the substrate while spin-coating, and
B. a serial process, where the replica material is spun on the mould and where in a second replication process the spun material is transferred to the substrate.

The invention makes possible the production of a large variety of integrated-optical structures like waveguides, lenses, gratings, prisms etc., which can be combined with micromechanical structures like alignment pins, grooves for optical fibers, lens holders, connector pins, etc.. Film thicknesses are in the order of one to one hundred micrometers.

Because the described replication process is performed in thin layers (in the order of only a few micrometers up to one hundred micrometers) on a stable substrate, a low shrinkage occurs, and a low amount of replica material is consumed.

The used replica material has a big influence on the processes described below. In principle the process and its variants can be performed with any liquid material that can be hardened, e.g., cured by ultraviolet light. The viscosity has to be matched to the desired film thickness and structure. This can be done by heating the material to make it more fluent or by using a solvent. Good results were achieved with an organically modified ceramic, Ormocer®.

### Brief description of the drawings

Embodiments of the invention and, for comparison, an example of the prior art are described in greater detail hereinafter relative to the attached schematic drawings.
- Figure 1: shows in a cross-section a replication step according to the prior art.
- Figure 2: shows in cross-sections various steps of the parallel spin replication process according to the invention.
- Figure 3: shows in cross-sections various steps of the serial spin replication process according to the invention for two layers.
- Figure 4: shows in cross-sections various steps of the serial spin replication process according to the invention for multiple layers.
- Figure 5: shows in a perspective view a three-dimensional vaveguide slope obtained by the method according to the invention.
- Figure 6: shows in a cross-section a replica obtained by the method according to the invention with electrical contacts.
- Figure 7: shows in a cross-section three different processes for covering a replica obtained by the method according to the invention with a cladding.

### Description of preferred embodiments

### A. Parallel Spin Replication Process

One aspect of the invention provides a wafer-scale replication process for the fabrication of a replica consisting of one thin layer. This embodiment of the method according to the invention is illustrated in **Figure 2**. The steps of the method are the following:
(a) Application of liquid replica material 2' on a substrate 3;
(b) Covering the substrate 3 and the liquid replica material 2' with a mould or replication tool 1 and -(if necessary) with an additional load (not shown);
(c) Spinning 4 and (if necessary) heating of the sandwich structure consisting of substrate 3, replica material 2' and mold 1;
(d) Hardening of the replica material 2', e.g., by UV light 5, thermally or by other means;
(e) Demoulding, e.g., with a demoulding tool 6, i.e., removing the mould 1 from the replicated thin film 2.

During the spin-coating step (c), the mould 1 is balanced by the impetus of the rotation, and the liquid replica material 2' is distributed by the centrifugal forces. The layer thickness is determined by the spin time, the spin speed, the viscosity of the replica material and the weight of the mould and the optional additional load. During or after spinning, the liquid replica material can be hardened by illumination with ultraviolet light 5 in the case of a UV-curable replica material and a transparent mould 1.

Even for optical purposes the used substrate 3 does not have to be precisely polished since the replica layer 2 may consist of a material matching the refractive index of the substrate 3.

### B. Serial Spin Replication Process

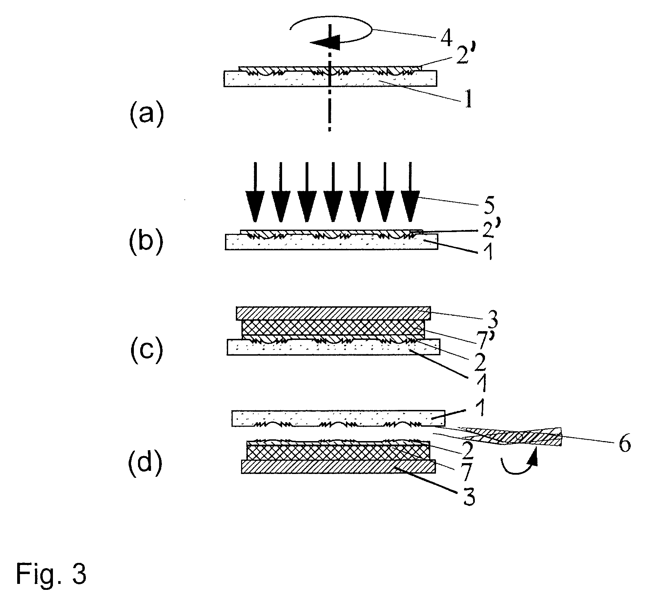

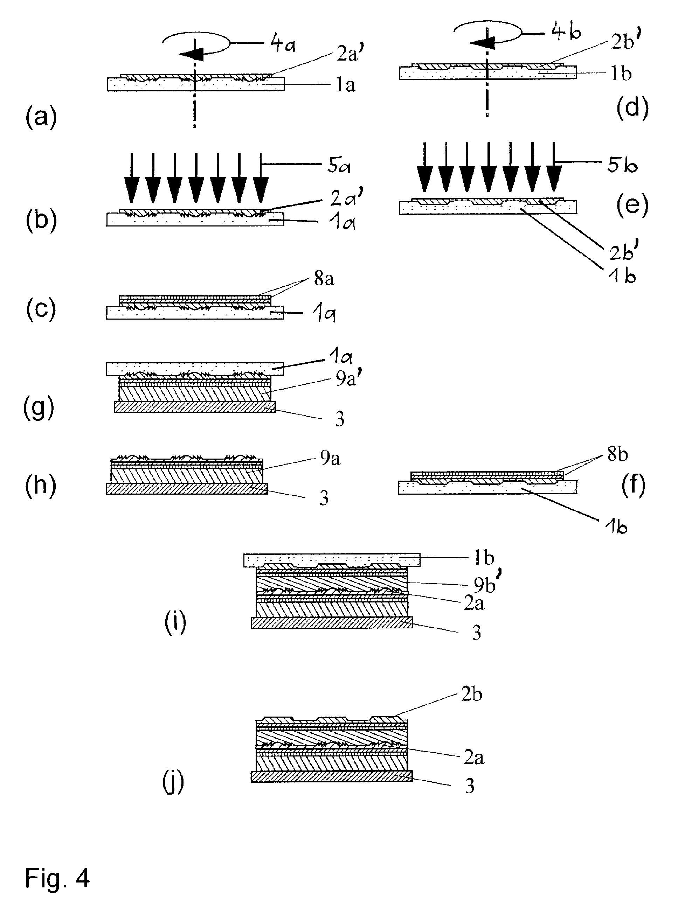

The serial spin replication process is a wafer-scale replication process for the fabrication of a replica consisting of (i) two or (ii) more layers. These two cases are described below with reference to Figures 3 and 4, respectively.

### (i) Serial Spin Replication Process for Two Layers:

Two layers are processed by performing the following steps, illustrated in **Figure 3**:
(a) Spin-coating 4 a mould or replication tool 1 with a liquid replica material 2' (which can contain a solvent);
(b) Hardening of the replica material 2', e.g., by UV curing 5, thermally or by other means;
(c) A second liquid material 7' for a second layer 7 is dispensed between the thin film 2 and a substrate or wafer 3. The substrate 3 and the mould 1 are aligned with respect to each other in a modified mask-aligner (not shown), and the second liquid layer 7' is hardened, e.g., by UV casting;
(d) The resulting two-layer structure consisting of first solid layer 2 and second solid layer 7 on the substrate 3 is released from the mould 1, e.g., with a demoulding tool 6.

The spin replication has to show respect to the viscosity of the unhardened replica material 2', as well as to the adhesive character and the structure size of the mould 1 to yield completely filled structures. Spin speed and spin time have to be appropriately adjusted.

Even for optical purposes the used substrate 3 does not have to be precisely polished since the second layer 7 may consist of a material matching the refractive index of the substrate 3.

### (ii) Serial Spin Replication Process for Multiple Layers:

With the serial spin replication process, also replicas consisting of a multiple stack of layers can be fabricated by the following steps, illustrated in **Figure 4**:
(a) Spin-coating 4a a first mould 1a with a liquid replica material 2a' (which may contain a solvent);
(b) Hardening, e.g., UV curing 5a of the replica material 2a';
(c) Optional: Repeating steps (a) and (b) as often as necessary to apply a stack of additional layers 8a with different materials on the first mould 1a;
(d)-(f) Optional: Repeating steps (a)-(c) on a second mould 1b to receive a second replica 2b and, optionally, one or a plurality of additional layers 8b;
(g) A liquid substrate-matching material 9a' is dispensed between a substrate or wafer 3 and the additional layers 8a. The substrate 3 and the first mould 1a are aligned with respect to each other in a modified mask-aligner (not shown), and the substrate-matching material 9a' is hardened, e.g., by UV casting;
(h) The stack of layers 1a, 8a, 9a on substrate 3 is removed from the first mould 1a;
(i) Optional: A liquid intermediate material 9b' is dispensed on the top layer 2a of the stack of layers 1a, 8a, 9a on the substrate 3. The substrate 3 and the second mold 1b with the second stack of layers 8b, 2b are aligned with respect to each other in a modified mask-aligner (not shown), and the intermediate material 9b' is hardened, e.g., by UV casting;
(j) Optional: The stack of layers 2b, 8b, 9b, 2a, 8a, 9a on substrate 3 is removed from the second mould 1b;
(k) Optional, not shown: Repeating steps (i), (j) in order to add further layers to the stack 2b, 8b, 9b, 2a, 8a, 9a on substrate 3.

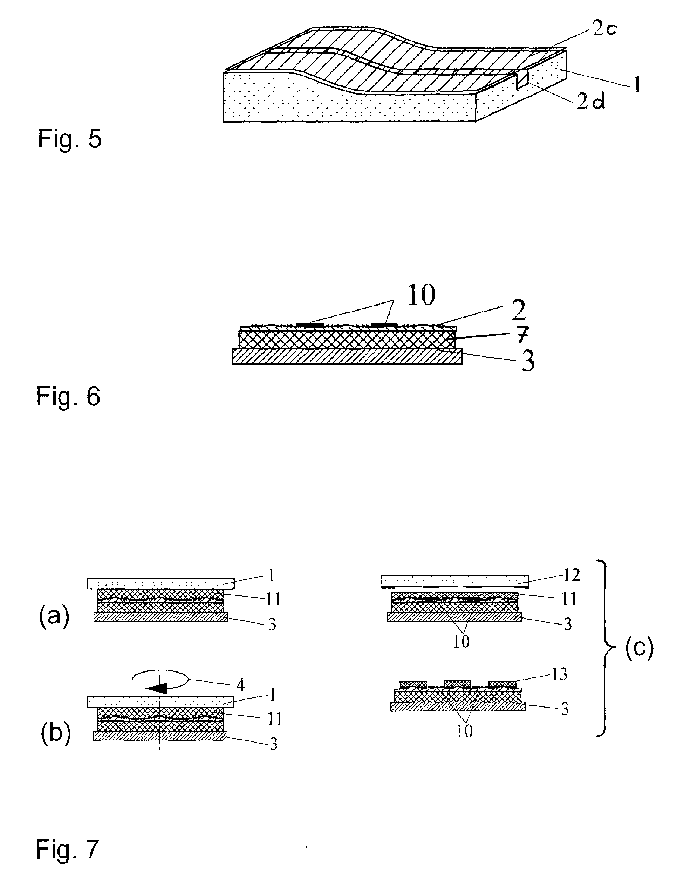

Another important aspect of the invention is the ability to configure a three-dimensional slope of a waveguide. This is illustrated in **Figure 5**. Small grooves of the mould 1 are filled very well with the replica material, thus a waveguide core 2d is performed. Large structures and/or slow variations of the mould relief are, however, covered with a thin film 2c rather than completely filled, as it is typical for a spin coating process. Thus, the path of the core can be guided up and down, e.g., for vertical couplers, splitters, sensors etc.. In this connection, "small" structures are those with dimensions on the surface of the mould smaller than about 10 times the film thickness, and "large" structures are those with dimensions on the surface of the mould are larger than about 100 times the film thickness.

A further important aspect of the invention provides a wafer-scale replication process for the fabrication of replicas consisting of layers with electrical contacts 10 in between, as shown in **Figure 6**. So far processes have been described which result in a stack of layers 2, 7 aligned to a substrate 3; after demoulding, the layer 2 on top carries a relief of one of the moulds. Known processes from the semiconductor industries, e.g., photolithography, thin film deposition and lift-off techniques, can be used to fabricate electrical contacts 10 onto the relief on top layer 2.

The topmost layer 2 of the stack of layers shown in Figs. 2-6 carries a relief of a mould. This topmost layer 2 can be covered with a cladding 11 by various processes, three of which are illustrated in **Figure 7**:
(a) A UV-curable liquid cladding material 11' is UV casted with the help of a flat mould 1; or
(b) A UV-curable liquid cladding material 11' is spin replicated 4 as described in with respect to Figs. 2-4 with the help of a flat mould 1; or
(c) A UV-curable liquid cladding material 11' is lithographically structured with a shadowing mask 12 to fabricate a partially hardened cladding 13. Thus, e.g., bond pads, electrical contacts 10, and fluidic channel entrances stay clean, and mechanically usable pins, podests etc. can be produced.

This invention is not limited to the preferred embodiments described above, to which variations and improvements may be made, without departing from the scope of protection of the present patent.

### List of reference signs

- 1: Mould or replication tool

- 2', 2a', 2b': Liquid-material layer
- 2, 2a, 2b: Solid film
- 2c: Thin film
- 2d: Waveguide core

- 3: Substrate or wafer

- 4, 4a, 4b: Spinning

- 5, 5a, 5b: UV casting

- 6: Demoulding tool

- 7: Second liquid material
- 7': Second solid layer

- 8a, 8b: Additional layers

- 9a: Substrate-matching material
- 9b: Intermediate material

- 10: Electrical contacts

- 11: Cladding layer

- 12: Shadowing mask

- 13: Partially hardened cladding

## Claims

1. A method for replication of a structure on a film (2), comprising the steps of:
contacting a surface of a liquid-material layer (2') with a surface of a replication tool (1) carrying the structure to be replicated,
hardening said liquid-material layer (2') to form a solid film (2),
attaching said solid film (2) to a substrate (3), and
removing said replication tool (1) from said solid film (2) ,
**characterized in that**
prior to or during the hardening step, said liquid-material layer (2') is spread over said surface of said replication tool (1) by centrifugal forces caused by spinning (4) said replication tool (1) and said liquid-material layer (2').

2. The method according to claim 1, wherein said liquid-material layer (2') is applied to said substrate (3), contacted with said surface of said replication tool (1) such that it is sandwiched between said substrate (3) and said surface, and spread between said substrate (1) and said surface by spinning (4) the assembly comprising said substrate (3), said replication tool (1) and said liquid-material layer (2').

3. The method according to claim 2, wherein a uniform pressure towards each other is applied between said substrate (3) and said replication tool (1) before and/or during the spinning (4) step, preferably by applying a load to said substrate (3) or said replication tool (1).

4. The method according to claim 2 or 3, wherein said liquid material (2') is chosen such that the refractive index of said solid film (2) formed from said liquid material (2') matches the refractive index of said substrate (3).

5. The method according to claim 1, wherein said liquid-material layer (2') is applied to said replication tool (1), spread over its surface by spinning said replication tool (1) and said liquid-material layer (2'), hardened to form a solid film (2) and attached to said substrate (3).

6. The method according to claim 5, wherein an intermediate layer (7) is produced between said solid film (2) and said substrate (3) by applying a second liquid-material layer (7') between said solid film (2) and said substrate (3) and hardening said second liquid-material layer (7') to form a second solid film (7).

7. The method according to claim 6, wherein said second liquid material (7') is chosen such that the refractive index of said second solid film (7) formed from said second liquid material (7') matches the refractive index of said substrate (3).

8. The method according to any of the claims 5-7, wherein said method is performed several times, thus yielding a stack of multiple layers (2b, 8b, 9b, 2a, 8a, 9a) on said substrate (3).

9. The method according to any of the claims 1-8, wherein said substrate (3) is a substrate provided with structures such as integrated-optical, optoelectronic, electronic and/or micromechanical structures, and said substrate (3) and said replication tool (1) are aligned with respect to each other.

10. The method according to any of the preceding claims, wherein said surface of said replication tool (1) carries structures the dimensions in said surface of which are at least 100 times larger than the thickness of the film (2).

11. The method according to any of the preceding claims, wherein further steps such as photolithography, thin-film deposition and/or lift-off techniques are applied to the film (2), e.g., for the fabrication of electrical contacts (10) on the structured film surface.

12. The method according to any of the preceding claims, wherein a cladding layer (11) is manufactured on the structured film surface.

13. The method according to any of the preceding claims, wherein said liquid-material layer (2') comprises an organically modified ceramic such as Ormocer®.

14. The method according to any of the preceding claims, wherein said liquid-material layer (2') is hardened thermally or by illumination with ultraviolet radiation (5).

15. The method according to any of the preceding claims, wherein a film thickness of 1-100 µm is achieved by appropriately choosing the viscosity of the liquid-material layer (2'), an amount of solvent added to said liquid material, the temperature of the liquid-material layer (2'), the spin time, the spin speed, and/or an additional pressure applied between said replication tool (1) and said substrate (3) before and/or during the spinning (4) step.
